# EUROPEAN PATENT SPECIFICATION

(11) **EP 0 534 226 B1**
(45) Date of publication and mention of the grant of the patent: **11.12.1996**
(21) Application number: 92115345.8
(22) Date of filing: 08.09.1992
(51) Int. Cl.: G01L 1/22, G01G 3/14

(54) **Strain sensor using a strain gauge circuit and load cell balance using the strain sensor**
Dehnungssensor mit einer Dehnungsmessstreifenschaltung und Kraftmesszellenwaage mit diesem Dehnungssensor
Palpeur de contrainte avec un circuit à jauges de contrainte et balance à capteur de force utilisant ce palpeur de contrainte

(30) Priority: 25.02.1992 JP 37573/92; 24.09.1991 JP 243142/91
(43) Date of publication of application: 31.03.1993
(73) Proprietor: Kabushiki Kaisha TEC, Shizuoka (JP)
(72) Inventor: Kikuchi, Takashi, Numazu-shi, Shizuoka-ken (JP); Nishikawa, Hisashi, Sunto-gun, Shizuoka-ken (JP); Sakamoto, Kouichirou, Mishima-shi, Shizuoka-ken (JP)
(74) Representative: Weber, Joachim, Dr.

(56) References cited:
- EP-A- 0 164 862
- EP-A- 0 227 850
- EP-A- 0 239 386
- EP-A- 0 399 466
- EP-A- 0 426 442
- FR-A- 2 587 484
- US-A- 4 690 230

## Description

The present invention relates to a strain sensor using a strain gauge circuit and a method for manufacturing the strain sensor and to a load cell balance using the strain sensor.

A strain gauge circuit using a strain sensor is known (e.g. from EP-A-0 227 850) having the strain gauge bonded to a beam with leads provided there.

In this type of strain sensor, however, it is necessary to bond a strain gauge to each beam with leads interconnected there, thus taking a lot of time in manufacture and involving a poor quality. Further, it is difficult to manufacture those strain sensors in quantity production.

A strain sensor as disclosed in Published Unexamined Japanese Patent Application 57-93220 is of such a type that a strain gauge circuit is formed, as a pattern, directly on the surface of a beam by a thin-film process. A similar sensor is known from EP-A-0 164 862. Those strain sensors have their strain gauge circuit patterned as set out above, making it possible to manufacture them in larger quantity than the aforementioned method.

Those strain sensors, having the strain gauge circuit formed as a pattern on the surface of the beam by the thin-film method, still pose a problem caused by having to form a pattern on each beam under a heavier work load, that is, a problem having to achieve an adequate quantity production at that time. Since less number of beams are placed on a film-manufacturing apparatus at a time, there is a bar to achieving a larger quantity production.

It is thus difficult, according to the conventional method, to manufacture a larger number of strain sensors by a simpler method at a low manufacturing cost and high quality.

FR-A-2 587 484 discloses a strain gauge sensor comprising a support substrate made of an electrically-isolating material, preferably ceramic material, bearing on one face at least one thick-film resistor. The support substrate is adapted to be firmly attached with its other face onto a member or structure, of which stresses and deformations are to be locally sensed, so that said stresses or deformations determine through the substrate corresponding deformations of said at least one thick-film resistor. The bonding technic, which is used in such a strain gauge sensor for connecting the substrate with the thick-film resistor requires more than a 100-factor accuracy to achieve an adequate sensitive unit. As the substrate and the resistor consist of different materials with different thermal expansion coefficient, it is very difficult to manufacture a large number of strain sensors at a low manufacturing cost and high quality and having the necessary accuracy.

EP-A-0 227 850 discloses a strain sensor comprising two strain gauge circuit patterns and a beam. The two circuit patterns are connected to each beam on opposite external surfaces of the beam to intensify the difference of the stretching and compressing signals of both circuit patterns, respectively. However, since each beam is connected with two circuit patterns, it takes a lot of time to manufacture such a strain sensor. Further, it is difficult to manufacture such strain sensors in quantity production because of the two patterns per beam.

It is an object of the present invention to provide a strain sensor, which is simply manufacturable in quantity production at a very low cost and a high quality and usable in a load cell balance.

According to the invention, the object is solved by the features of the independent claims 1 and 3.

The sub-claim contains further advantageous developments of the invention.

This invention can be more fully understood from the following detailed description when taken in conjunction with the accompanying drawings, in which:
Fig. 1 is a perspective view showing a strain sensor according to a first embodiment of the present invention;
Fig. 2 is a side view showing the strain sensor shown in Fig. 1;
Fig. 3 is a view showing a substrate material for forming strain gauge circuit patterns for the embodiment;
Fig. 4A is an explanative view showing the process of forming a strain gauge circuit pattern for the embodiment;
Fig. 4B is an explanative view showing the process for forming the strain gauge circuit pattern for the embodiment;
Fig. 4C is an explanative view showing the process for forming the strain gauge circuit pattern for the embodiment;
Fig. 4D is an explanative view showing the process for forming the strain gauge circuit pattern for the embodiment;
Fig. 5 is a view showing an elastic metal substrate of the first embodiment;
Fig. 6 is a view showing an equivalent circuit of the strain gauge circuit pattern of the embodiment;
Fig. 7 is a partly enlarged view showing an elastic metal substrate bonded on a beam in the first embodiment;
Fig. 8A is a side view showing a variant of a strain sensor of the first embodiment;
Fig. 8B is a side view showing a variant of a strain sensor of the first embodiment;
Fig. 8C is a view showing a variant of a strain sensor of the first embodiment;
Fig. 9 is an exploded perspective view showing a strain sensor according to a second embodiment of the present invention;
Fig. 10 is a view showing an equivalent circuit of a strain gauge circuit pattern of the embodiment;
Fig. 11 is a block circuit showing a load cell balance for the second embodiment;
Fig. 12 is a side view showing an example of a load applied to the embodiment;
Fig. 13A is a graph showing an instrumental error curve plotted against the load as shown in Fig. 12;
Fig. 13B is a graph showing an instrumental error curve plotted against the load as shown in Fig. 12;
Fig. 13C is a graph showing an instrumental error curve plotted against the load as shown in Fig. 12;
Fig. 14 is a side view showing another example of a load applied to the embodiment;
Fig. 15A is a graph showing an instrumental error curve plotted against the load as shown in Fig. 14;
Fig. 15B is a graph showing an instrumental error plotted against the load as shown in Fig. 14;
Fig. 15C is a graph showing an instrumental error plotted against the load as shown in Fig. 14;
Fig. 16 shows an equivalent circuit of a strain gauge circuit pattern of a variant of the second embodiment;
Fig. 17 is a block diagram showing a variant balance according to the present invention;
Fig. 18 is a perspective view showing a strain sensor according to a third embodiment of the present invention;
Fig. 19 is a side view showing a strain sensor of the third embodiment;
Fig. 20 is a perspective view showing a variant of the third embodiment; and
Fig. 21 is a side view showing the variant of the third embodiment.

A first embodiment of the present invention will be explained below with reference to the accompanying drawings.

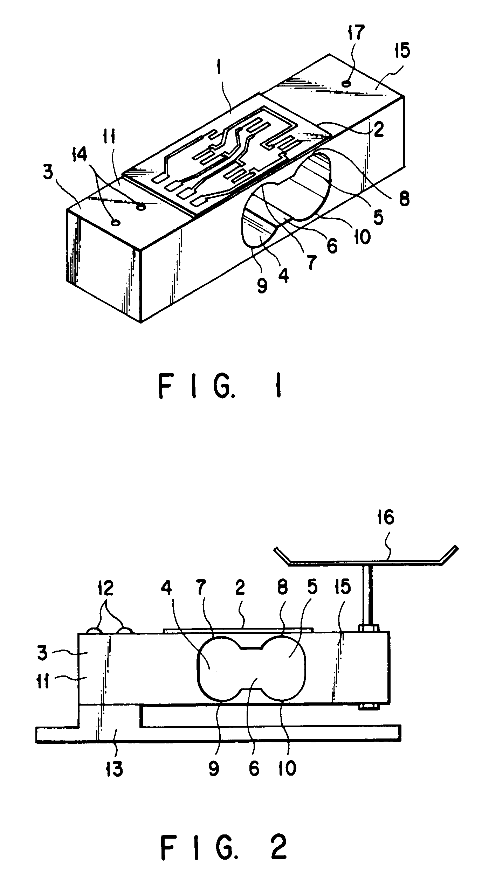

In Figs. 1 and 2, reference numeral 2 shows an elastic metal substrate with a strain gauge circuit pattern 1 formed on its surface.

The elastic metal substrate 2 is fixedly bonded to a deformation area of a beam 3 having the same thermal expansion coefficient as that of the substrate 2. The beam 3 has a Roberval's mechanism and the elastic metal substrate 2 is adhesively bonded to the beam 3 such that a strain gauge portion of the strain gauge circuit pattern is located at the deformation area of Roberval's mechanism.

As the adhesive, use is made of a mixed one of, for example, finely powdered ceramics of several µ and epoxy resin. By so doing, the thermal expansion of the adhesive can be made equal to those of the elastic metal substrate 2 and beam 3.

A pair of holes 4, 5 are provided in the middle of the beam 3 such that both the holes 4 and 5 are defined as a substantially dumbbell configuration, with a pair of opposed ridges 6 located in the middle of the dumbbell configuration to provide thin-walled deformation areas as will be set out below.

Thin-wall deformation areas are provided, as upper and lower areas 7 and 9, on one hole 4 side and, as upper and lower areas 8 and 10, on the other hole 5 side with the middle of the beam as a reference.

The beam 3 has a fixing section 11 at its one end and a pressure receiving section at its other end. Mount holes 14 are provided in the fixing section 11 of the beam 3 and screws 12 are inserted through the mount holes 14 and fastened to a base 13. A mount hole 17 is provided at the pressure receiving section 15 of the beam 3 and a pan 16 for a balance has its stem mounted in the mount hole 17 at the pressure receiving section 15 of the beam 3.

The strain gauge circuit pattern 1 is formed on the elastic metal substrate 2 as will be set out below.

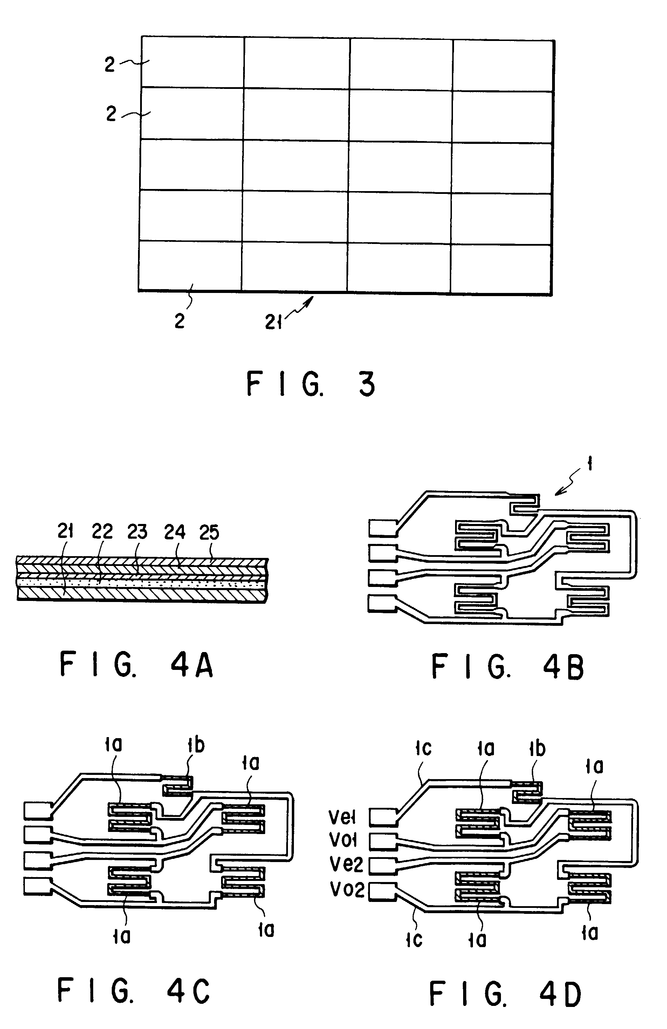

A relatively large substrate material 21 is first prepared which is of such a type as shown in Fig. 3. The substrate material 21 is formed of an elastic metal sheet, such as duralmin, Be-Cu (beryllium copper) and stainless steel. That is, a strain sensor detects an amount of deformation upon the application of a load to the beam 3 and, at that time, a corresponding output voltage is proportional to the amount of deformation involved. If a material is so selected that it can pick up as large an amount of deformation as possible, it is possible to take a greater output voltage. The materials as set out above are suited to meet the aforementioned requirement.

If the substrate material is made of the elastic metal, such as duralimin, Be-Cu (beryllium copper) and stainless steel, then a corresponding material is used for the beam 3.

The substrate material 21 is so blocked as to conform to the elastic metal substrate 2 each and a strain gauge circuit pattern 1 is formed by thin-film forming steps for the respective block.

At a first step, the surface of the substrate material is polished and washed.

At a second step, an insulating resin layer 22 is formed on the surface of the substrate material 21. The insulating resin layer 22 is formed by the coating of, for example, a polyimide varnish followed by a heat curing step.

At a third step, a strain gauge resistive layer 23 is formed by a sputtering method, noting that the resistive layer 23 is formed of, for example, an Ni-Cr-Si layer.

At a fourth step, a temperature compensation resistive layer 24 is formed on the strain gauge resistive layer 23, noting that the resistive layer 24 is formed of, for example, a Ti layer.

At a fifth step, a lead interconnection layer 25 is formed on the temperature compensation resistive layer 24, noting that the interconnection layer 25 is formed of, for example, a Cu layer.

By so doing, a laminate unit is formed as shown in Fig. 4A.

The respective layers 22 to 25 are formed of thin layers sequentially produced within the same vacuum container. The thickness of these layers 22 to 25, though differing depending upon the configuration of the pattern and arrangement of a detection circuit for detecting a signal of a strain sensor, is set, for example, to be 4 µm for an insulating resin layer 22 formed of a polyimide layer, 1,000 Å for a strain gauge resistive layer 23 formed of a Ni-Cr-Si layer; 5,000 Å for a temperature compensation resistive layer 24 formed of a Ti layer and about 2 µm for a lead interconnection layer 25 formed of a Cu layer.

At a sixth step, a strain gauge circuit pattern 1 is formed by a photoetching process using a selective etching method. After a photoresist layer has been formed prior to an etching step, a pattern is printed using an exposure mask of a given pattern and developed to provide a resist pattern.

As shown in Fig. 4B, those layers other than the circuit pattern are sequentially etched by a corresponding etchant from a top layer downward to leave that circuit pattern only.

At a seventh step, an overlying Cu layer is etched by a similar process to expose four strain gauge pattern sections 1a and span temperature compensation pattern section 1b as shown in Fig. 4C. By so doing, the span temperature compensation resistive section 1b is completed.

At an eighth step, a Ti layer overlying the strain gauge pattern section 1a is etched by a similar process to expose Ni-Cr-Si layer. By so doing, the strain gauge pattern sections 1a are completed as shown in Fig. 4D.

In this way, lead electrodes Ve1, Ve2, Vo1 and Vo2, strain gauge pattern sections 1a, span temperature compensation resistive pattern section 1b and load interconnection pattern section 1c are formed, as a strain gauge circuit pattern, on the respective blocks of the substrate material 21.

A protective layer is formed on the strain gauge circuit pattern 1 and checking, etc., are done.

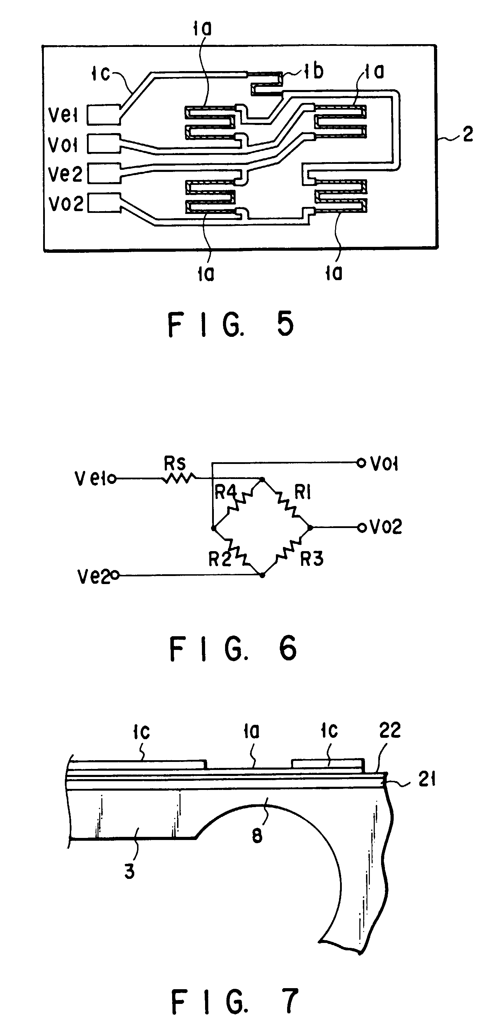

The resultant substrate material is so separated as to provide respective blocks each having the completed strain gauge circuit pattern. In this way, the substrate 2 is obtained as an elastic metal substrate as shown in Fig. 5.

Fig. 6 shows an equivalent circuit for the strain gauge circuit pattern 1 on the elastic metal substrate 2.

As will be evident from Fig. 6, a bridge circuit is created having resistors R1, R2, R3 and R4 corresponding to the four strain gauge pattern sections 1a and a resistor R_{S} corresponding to the span temperature compensation pattern section 1b.

The elastic metal substrate 2 thus manufactured is fixedly bonded to the beam 3 such that the strain gauge pattern section 1a is located at the deformation area 8(7). In this case, bonding is effected by an adhesive, such as an epoxy resin.

If the elastic metal substrate 2 and beam 3 are made of a heat-resistant material such as stainless steel, then the elastic metal substrate 2 is thermocompression bonded to the beam 3 after their bonding faces have been gold-plated.

In order to obtain a stable bond after such bonding has been effected, use may be made of an adhesive mixed with a filler comprised of finely powdered ceramics.

According to the present invention, a strain gauge circuit pattern 1 is initially formed by a thin-film process on each block on a substrate material 21, a great number of elastic metal substrates 2 are formed at a time so that they are separated for each block, and the respective elastic metal substrate 2 is joined to the respective beam 3 to manufacture a great number of strain sensors.

Since the substrate material 21 is thin and small, a greater number of elastic metal substrates 2 can be manufactured by a film forming apparatus at a time at the step of forming a great number of strain gauge circuit patterns 1 on the substrate material 21, thus ensuring a quantity production.

Since the strain sensor can be manufactured in a quantity production through a thin film process, it is possible to reduce the manufacturing cost and high quality involved.

If there exists a difference in temperature coefficient between the material of the beam 3 and that of the elastic metal substrate 2 in terms of their expansion, a stress is induced, causing a drift in a corresponding output. For example, if an input voltage 10V is applied to a strain gauge circuit so that a strain of 1µ is produced at the bond face, then an output voltage varies by about 20 µV. Since the bond face is susceptible to such a stress, it is required that the beam and elastic metal substrate be made of the same material.

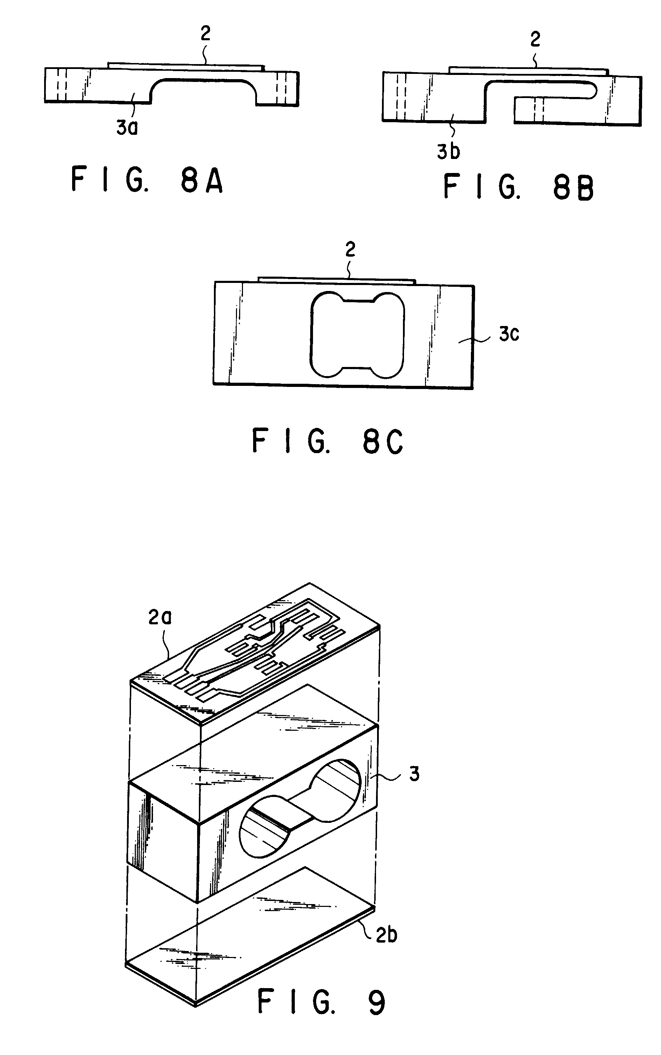

Although, in the aforementioned embodiment, the beam has been explained as having a Roberval's mechanism, the present invention is not restricted thereto. For example, beams 3a and 3b as shown in Figs. 8A and 8B may also be employed in which case these beams have no Roberval's mechanism. That is, the beam 3a as shown in Fig. 8B has a bottom curved recess to define an upper thin-walled area above which an elastic metal substrate is located and the beam as shown in Fig. 8B has an L-shaped recess opened at a bottom with its longer recess portion extending along the upper surface of the beam so that an elastic metal substrate is located on the upper surface of the beam 3b with an upper thin-walled area defined between the longer recess portion of the L-shaped recess and the upper surface of the beam. Further, a beam 3C as shown in Fig. 8C may be employed having a different Roberval's mechanism, that is, the beam 3C has a middle hole of a substantially rectangular configuration with their four corners outwardly projected to provide thin-walled areas at the upper and lower portions of the substantially rectangular configuration hole.

A second embodiment of the present invention will now be explained below with reference to Fig. 9. It is to be noted that the second embodiment of the present invention is applied, as a strain sensor, to a balance.

In Fig. 9, a beam 3 equipped with a Roberval's mechanism is of such a type that a pair of elastic metal sheets 2a, 2b are adhesively bonded one at an upper surface and one at a lower surface of the beam 3 as shown in Fig. 9, noting that these elastic metal substrate material as formed by the thin-film process are separated on a block-by-block basis.

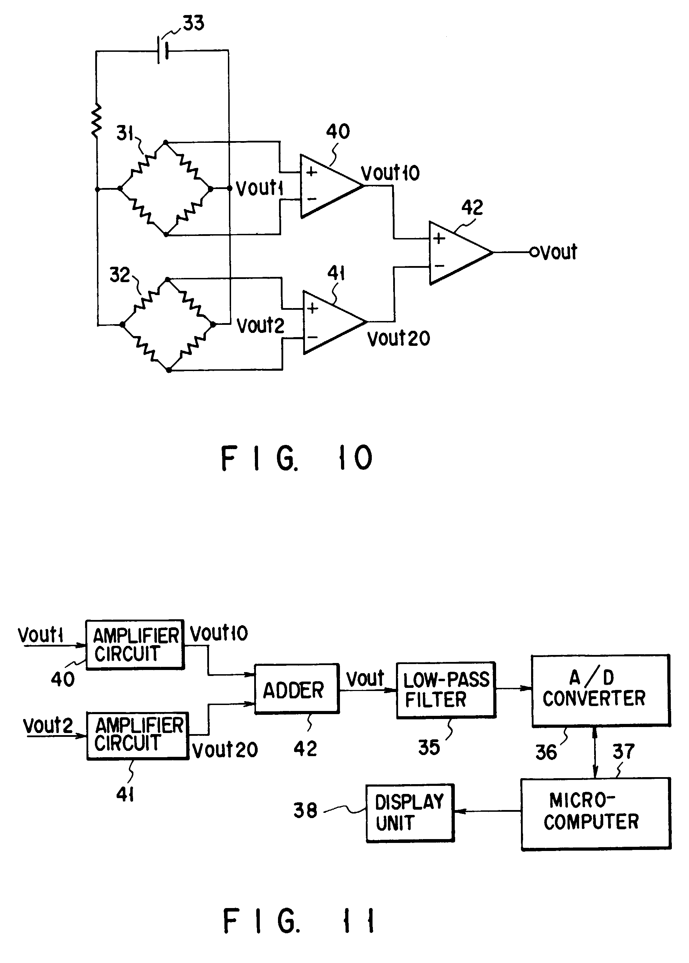

The strain sensor constitutes a circuit arrangement as shown in Fig. 10 and, that is, a pair of bridge circuits 31, 32 are connected at their input terminal to a DC power source 33 through a resistor and each comprised of a strain gauge circuit pattern formed on a respective elastic metal substrate (2a, 2b).

The respective bridge circuits 31 and 32 deliver outputs Vout1 and Vout2 at their output terminals. The outputs Vout1 and Vout2 of the bridge circuits 31 and 32 are input to amplifier circuits 40 and 41, respectively.

The inputs of the amplifier circuits 40 and 41 are amplified and the outputs Vout10 and Vout20 of the amplifier circuits 40 and 41 are input to an adder 42.

The adder 42 adds together the amplified outputs Vout10 and Vout20 and delivers an output voltage Vout corresponding to a load involved.

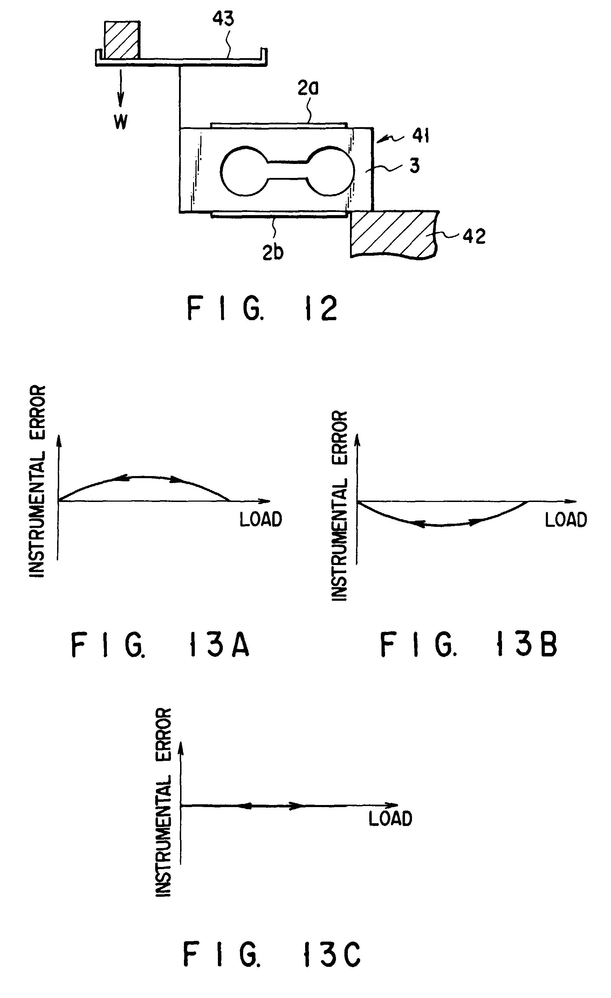

The output voltage Vout of the adder 42 is supplied past a lowpass filter 35 to an A/D converter 36 as shown in Fig. 11.

The A/D converter 36 outputs count data corresponding to the input voltage to a microcomputer 37.

The microcomputer 37 converts the input count data to weighed value data, for example, in units of a gram and delivers it to a display unit 38 where it is displayed.

Even in the embodiment, a substrate material with strain gauge circuit patterns each formed by a thin film process on a respective block is separated on a block-by-block fashion to provide respective elastic metal substrates. Since, in this case, two (2a, 2b) of the elastic metal substrates are bonded to the upper and lower surfaces of the beam 3 to provide a strain sensor, it is possible to manufacture strain sensors in quantity production.

Because the strain sensor uses two elastic metal substrates 2a and 2b and the outputs of the strain gauge circuits on the elastic metal substrates 2a and 2b are taken out after being amplified by the amplifier circuits 40 and 41 and added together by the adder 42, it is possible to improve the sensitivity by a factor of 2. Further, a subsequent-stage circuit may be formed as one system, because it needs only to deal with only the output of the adder 42, and it is possible to lower the manufacturing cost involved.

The beam 3 equipped with the Roberval's mechanism has the elastic metal substrate 2a bonded to its upper surface and elastic metal substrate 2b bonded to its lower surface, thus making it possible to obtain the linearity of the output to the load.

The strain sensor 41 is fixed to a base 42 at the lower surface of its one end portion with a pan 43 mounted on the other end of the strain sensor 41 as shown in Fig. 12. When a load W is applied to a far end portion of the pan as shown in Fig. 12, then the beam 3 is bent and those instrumental error curves plotted against the load W on the elastic metal substrates 2a and 2b are curved in opposite directions, that is, one in an upward direction and one in a downward direction as shown in Figs. 13A and 13B.

Since the outputs of the strain gauge circuits of the respective elastic metal substrates 2a and 2b are added together at the adder 42, their instrumental error curves corresponding to the output of a series circuit of the two strain gauge circuits are cancelled with respect to each other to obtain a straight line as shown in Fig. 13C. Here the instrumental error curves plotted against the load denote a discrepancy when a zero gram and weighed value are linearly approximated.

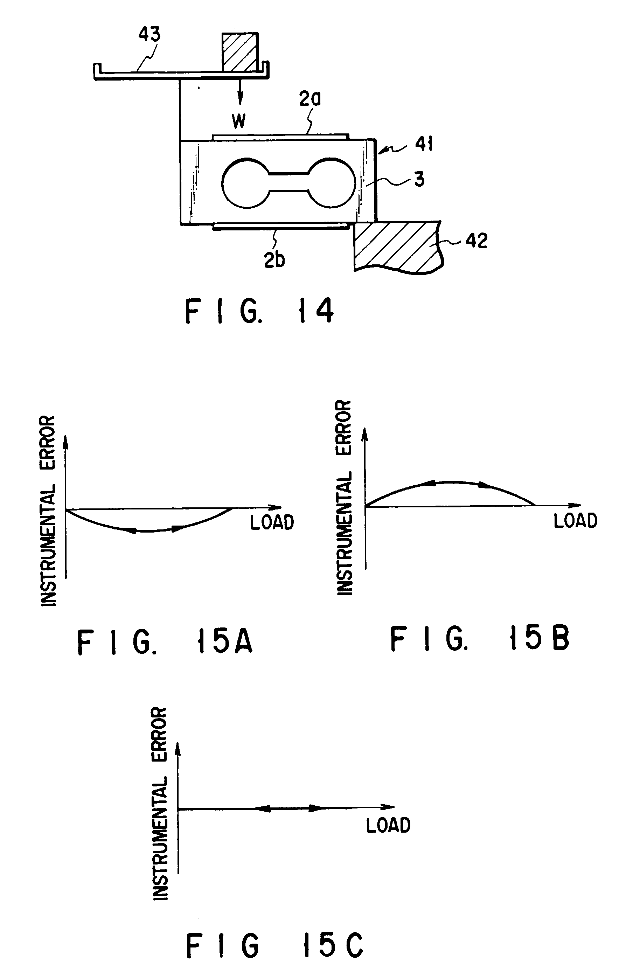

When the load W is applied to a near end portion of the pan 43 as shown in Fig. 14, the beam 3 is bent and the instrumental error curves plotted against the load W on the elastic metal substrates 2a and 2b are the opposite to the case where the load W is applied to the far end portion of the pan, that is, are curved as shown in Figs. 15A and 15B. Even in this case, the outputs of the respective elastic metal substrates 2a and 2b are added together and hence their instrumental error curves corresponding to the output of the series circuit of the two strain gauge circuits are cancelled with respect to each other to obtain a straight line as shown in Fig. 15C.

Since the strain sensor is of such a type that the elastic metal substrates 2a and 2b are bonded to the beam 3 and their outputs are added together, it is possible to obtain the aforementioned linearity against the load. Even when the load is applied anywhere on the surface of the pan 43, the present strain sensor can effect accurate weighing through its own linearity against any load involved.

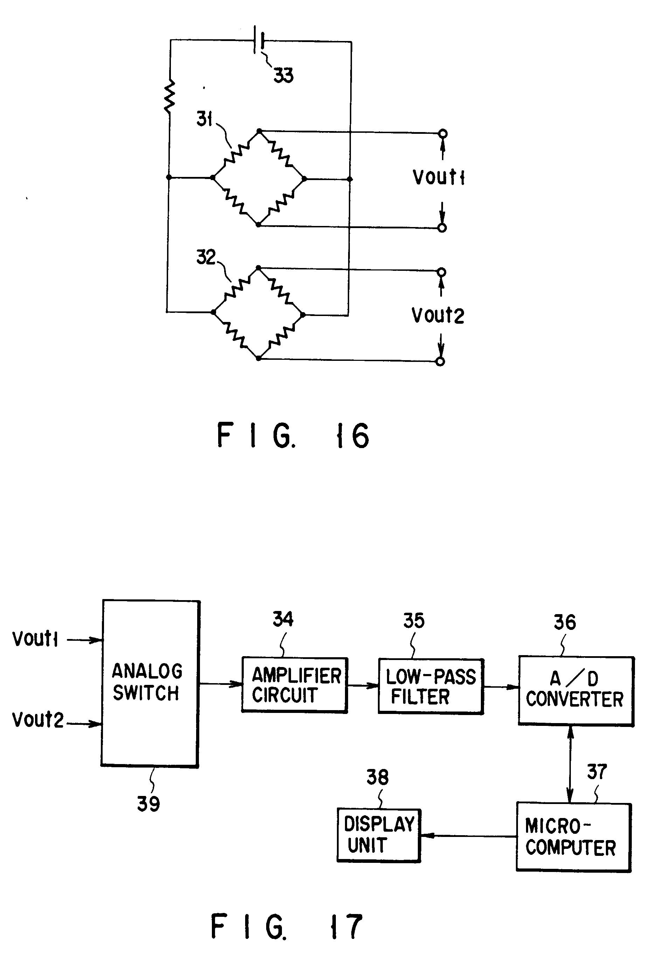

In the second embodiment, the outputs Vout1 and Vout2 of the bridge circuits 31 and 32 on the strain gauge circuit patterns of the elastic metal substrates 2a and 2b are added together at the adder 42 after being amplified by the amplifier circuits 40 and 41. On the other hand, the output voltages Vout1 and Vout2 of bridge circuits 31 and 32 as shown in Fig. 16, after being supplied to an analog switch 39 as shown in Fig. 17, may be selectively supplied to an amplifier circuit 34. In this case, a microcomputer 37 after being supplied with count data corresponding to the output voltages Vout1 and Vout2 past a lowpass filter 35 and A/D converter 36 can additively process both the corresponding count data to obtain a weighed value in which case it is possible to obtain the linearity against a load involved.

If below one second is taken from the application of a load to the pan 43 to the determination of its load, about 50 to 100 msec will be correspondingly required as the switching speed of the analog switch 39.

A third embodiment of the present invention will be explained below.

In the first and second embodiments, it is necessary to, when the elastic metal substrates 2, 2a, 2b are bonded to the surfaces of the beam 3, locate the strain gauge on the beam 3 at an area corresponding to the deformation areas of the beam 3. It is, therefore, difficult to position the strain gauge of the strain gauge circuit upon being bonded to the corresponding surface of the beam 3.

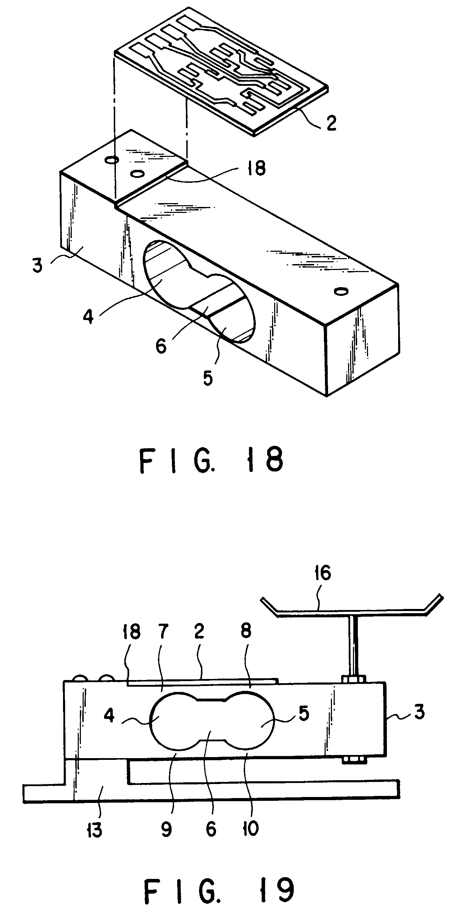

As shown in Fig. 18 and 19, a step 18 is provided on that area of a beam 3 where an elastic metal substrate 2 is bonded. When the elastic metal substrate 2 is to be bonded to the beam 3, one end of an elastic metal substrate 2 is abutted against the step 18 on the surface of the beam 3 so that a strain gauge of a strain gauge circuit is positioned at a deformation area of the beam 3. It is, therefore, easy to bond the elastic metal substrate 2 to the beam 3. Further, the deformation area of the beam 3 can be accurately positioned in an aligned relation.

In the case where the elastic metal substrate is bonded to each surface of the beam 3 as in the second embodiment, a step needs to be provided on each surface of the beam 3.

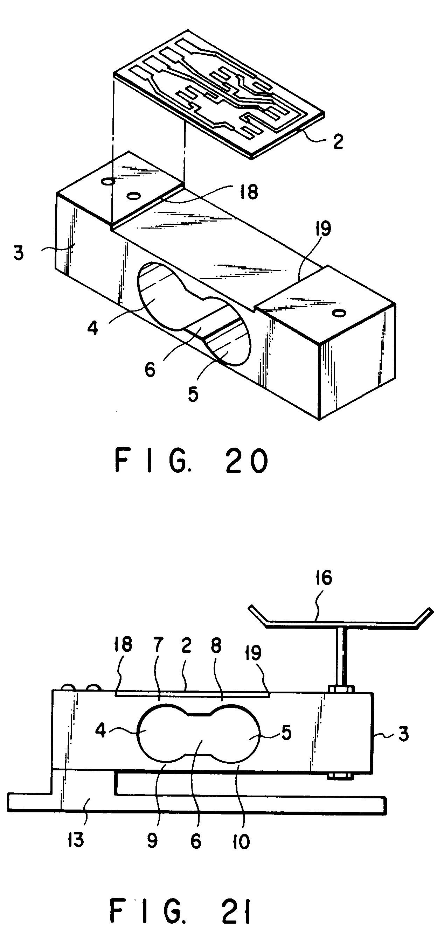

For a step 18 on the surface of a beam 3 against which an elastic metal substrate 2 is abutted, another step 19 is provided on the same surface of the beam 3 at an area adequately greater than the length of the elastic metal substrate 2 such that the step 19 is located in an opposed relation to the step 18 as shown in Figs. 20 and 21. Further, the elastic metal substrate 2 can be externaly protected by bonding the elastic metal substrate 2 to that area of the beam 3 defined between the steps 18 and 19, thus preventing a possible risk that the elastic metal substrate 2 will be peeled off the beam 3 due to an external impact caused during manufacture.

As the step 19 integral with the beam 3 use may be made of a separate member to be bonded at each end portion of the beam 3.

Although, in the respective embodiment, the elastic metal substrate has been explained as being used as an elastic substrate, the present invention is not restricted thereto. For example, a ceramics substrate may be employed as such in which case, depending upon a material of which the beam 3 is made, a vitreous bond may sometimes be employed.

It may be possible to join an elastic metal substrate to the beam 3 by inserting, into their engaging holes, corresponding pins having the same thermal expansion coefficient as those of the elastic metal substrate and beam.

## Claims

1. A strain sensor equipped with a strain gauge circuit to detect an amount of deformation at a deformation area deformable under a load, comprising:
- base means formed of an elastic metal substrate (2) and having a strain gauge circuit pattern (1) formed on a surface thereof; and
- beam means (3) deformable under a load and having the same thermal expansion coefficient as that of the base means; characterized by
- means for adhesively bonding the base means to the surface of the beam means (3) with a strain gauge section of a strain gauge circuit pattern (1) aligned with a deformation area (7-10) of the beam means (3), the adhesively bonding means having the same thermal expansion coefficient as that of the base means.

2. The strain sensor according to claim 1, characterized in that a step is provided on a bonding surface of the substrate (2) such that at least one end of the substrate (2) is positioned relative to the step.

3. A load cell balance using a strain sensor equipped with a strain gauge circuit to detect an amount of deformation at a deformation area deformable under a load, comprising:
- a pair of base means both made of the same material, the base means being formed of an elastic metal substrate (2) having a strain gauge circuit pattern (1) formed on its surface;
- beam means (3) comprised of a Roberval's mechanism having an upper deformation area (7,8) and a lower deformation area (9,10) which are deformable under a load, the beam means (3) having the same thermal expansion coefficient as that of the base means;
- a pair of amplyfing means (40, 41) for amplyfing the outputs of the strain gauge circuit patterns;
- adding means (42) for adding together both amplyfied outputs of the amplyfing means (40, 41);
- analog/digital conversion means (36) for converting an analog output of the adding means (42) to digital data;
and
- means (37) for receiving the digital data from the analog/digital conversion means (36) and for finding a corresponding weighed value;
characterized by
- means for bonding a pair of base means, one to an upper surface and one to a lower surface of the beam means (3) at the upper and lower deformation positions of the beam means (3) with a strain gauge pattern section of the strain gauge circuit pattern (1) aligned with the upper and lower deformation areas (7-10), the bonding means having the same thermal expansion coefficient as that of the base means.

## Patentansprüche

1. Dehnungssensor mit einer Dehnungsmeßstreifenschaltung, um einen Verformungsgrad an einer unter einer Kraft verformbaren Verformungsfläche zu erfassen, mit:
- einer Basiseinrichtung, welche auf dem elastischen Metallsubstrat (2) ausgebildet ist und ein Dehnungsmeßstreifen-Schaltungsmuster (1) aufweist, welches auf dessen Oberfläche ausgebildet ist; und
- einer Trägereinrichtung (3), welche unter einer Kraft verformbar ist und den gleichen thermischen Expansionskoeffizienten wie die Basiseinrichtung aufweist;
gekennzeichnet durch
- eine Einrichtung, welche die Basiseinrichtung mit der Oberfläche der Trägereinrichtung (3) verklebt, wobei der Dehnungsmeßstreifenabschnitt des Dehnungsmeßstreifen-Schaltungsmusters (1) bezüglich der Verformungsfläche (7 bis 10) der Trägereinrichtung (3) ausgerichtet ist und die Einrichtung für die Klebeverbindung den gleichen thermischen Expansionskoeffizienten wie die Trägereinrichtung aufweist.

2. Dehnungsssensor nach Anspruch 1, dadurch gekennzeichnet, daß ein Absatz auf der Klebefläche des Substrats (2) derart vorgesehen ist, daß zumindest ein Ende des Substrats (2) relativ zum Absatz positioniert ist.

3. Kraftmeßzellenwaage, welche einen Dehnungssensor mit einer Dehnungsmeßstreifenschaltung verwendet, um einen Verformungsgrad einer unter einer Kraft verformbaren Verformungsfläche zu erfassen, mit:
- einem Paar von aus gleichem Material hergestellten Basiseinrichtungen, wobei die Basiseinrichtung aus einem elastischen Metallsubstrat (2) mit einem auf dessen Oberfläche ausgebildeten Dehnungsmeßstreifen-Schaltungsmuster (1) ausgebildet ist;
- einer Trägereinrichtung (3), welche einen Robervalschen Mechanismus mit einer oberen Verformungsfläche (7, 8) und einer unteren Verformungsfläche (9, 10) aufweist, welche unter einer Kraft verformbar sind, wobei die Trägereinrichtung (3) den gleichen thermischen Expansionskoeffizienten wie die Basiseinrichtung aufweist;
- einem Paar von Verstärkungseinrichtungen (40, 41) zum Verstärken der Ausgangssignale der Dehnungsmeßstreifen-Schaltungsmuster;
- einer Addiereinrichtung (42) zum Addieren beider verstärkter Ausgangssignale der Verstärkungseinrichtungen (40, 41);
- einer Analog/Digital-Wandlereinrichtung (36) zum Umwandeln eines analogen Ausgangs der Addiereinrichtung (42) in digitale Daten; und
- einer Einrichtung (37) zur Aufnahme der digitalen Daten von der Analog/Digital-Wandlereinrichtung (36) und zum Auffinden eines entsprechenden gewogenen Wertes;
gekennzeichnet durch
- eine Einrichtung zum Verbinden des Paars von Basiseinrichtungen, wobei die eine an einer oberen Fläche und die andere an einer unteren Fläche der Trägereinrichtung (3) an den oberen und unteren Verformungspositionen der Trägereinrichtung (3) befestigt wird, wobei ein Dehnungsmeßstreifen-Schaltungsmuster (1) mit den oberen und unteren Verformungsflächen (7 bis 10) ausgerichtet ist und die Verbindungseinrichtung den gleichen thermischen Expansionskoeffizienten wie die Basiseinrichtung aufweist.

## Revendications

1. Capteur de contrainte muni d'un circuit de jauge de contrainte pour détecter une valeur de déformation au niveau d'une zone de déformation déformable sous une charge, comprenant :
un moyen de base formé en un substrat métallique élastique (2) et comportant un motif de circuit de jauge de contrainte (1) formé sur l'une de ses surfaces ; et
un moyen de poutre (3) déformable sous une charge et présentant le même coefficient de dilatation thermique que celui du moyen de base,
caractérisé par :
un moyen pour lier de manière adhésive le moyen de base à la surface du moyen de poutre (3), une section de jauge de contrainte d'un motif de circuit de jauge de contrainte (1) étant alignée avec une zone de déformation (7-10) du moyen de poutre (3), le moyen de liaison de manière adhésive présentant le même coefficient de dilatation thermique que celui du moyen de base.

2. Capteur de contrainte selon la revendication 1, caractérisé en ce qu'une marche est prévue sur une surface de liaison du substrat (2) de telle sorte qu'au moins une extrémité du substrat (2) soit positionnée par rapport à la marche.

3. Balance à dynamomètre utilisant un capteur de contrainte muni d'un circuit de jauge de contrainte pour détecter une valeur de déformation au niveau d'une zone de déformation déformable sous une charge, comprenant :
une paire de moyens de base tous deux réalisés en le même matériau, les moyens de base étant formés en un substrat métallique élastique (2) comportant un motif de circuit de jauge de contrainte (1) formé sur leur surface ;
un moyen de poutre (3) constitué par un mécanisme de Roberval comportant une zone de déformation supérieure (7, 8) et une zone de déformation inférieure (9, 10) qui sont déformables sous une charge, le moyen de poutre (3) présentant le même coefficient de dilatation thermique que celui des moyens de base ;
une paire de moyens d'amplification (40, 41) pour amplifier les sorties des motifs de circuit de jauge de contrainte ;
un moyen d'addition (42) pour additionner ensemble les deux sorties amplifiées des moyens d'amplification (40, 41) ;
un moyen de conversion analogique-numérique (36) pour convertir une sortie analogique du moyen d'addition (42) en données numériques ; et
un moyen (37) pour recevoir les données numériques provenant du moyen de conversion analogique-numérique (36) et pour rechercher une valeur pondérée correspondante,
caractérisée par :
un moyen pour lier une paire de moyens de base, l'un sur une surface supérieure et l'un sur une surface inférieure du moyen de poutre (3), au niveau des positions de déformation supérieure et inférieure du moyen de poutre (3), une section de motif de jauge de contrainte du motif de circuit de jauge de contrainte (1) étant alignée avec les zones de déformation supérieure et inférieure (7-10), le moyen de liaison présentant le même coefficient de dilatation thermique que celui des moyens de base.
